# EUROPEAN PATENT APPLICATION

(11) **EP 4 535 599 A1**
(43) Date of publication of application: **09.04.2025**
(21) Application number: 23383029.8
(22) Date of filing: 05.10.2023
(51) Int. Cl.: H02J 7/00, B60L 53/16

(54) **CHARGING POINT FOR AN ELECTRIC VEHICLE AND MANAGING SYSTEM**

(71) Applicant: Technologies de Control de L'Electricitat I Automatitzacio, S.L., 08907 L'Hospitalet de Llobregat Barcelona (ES)
(72) Inventor: Pagès Giménez, Marc, 08870 Sitges (ES); Sudrià Andreu, Antoni, 08015 Barcelona (ES); Montesinos i Miracle, Daniel, 08794 Les Cabanyes (ES)
(74) Representative: Clarke, Modet y Cía., S.L.

(57) **Abstract**

Charging point (20) for an EV (24) and managing system (54). The Charging point (20) comprises a PCB (11) and a cover (21). A first group of female contacts (131-133) corresponds to neutral, protective earth and line, and a second group of female contacts (134-135) corresponds to pilot function and proximity function. Each female contact (131-135) is directly soldered to the printed circuit board (11). The cover (21) hosts the PCB (11), and, has on the rear side a peripherical edge (23) and a flat portion (14a) forming a plane for placing and holding the PCB (11). The cover (21) has on the front side a sunken portion (14b) and protruding hollow elements (12) extending from the sunken portion (14b) that allocates a female contact (131-135) inside and may receive a male contact of a plug (102) of a charging cable (104).

## Description

### FIELD OF THE INVENTION

The invention belongs to the field of electric road vehicles (EV), more specifically it is related to devices and systems used in charging points of charging stations.

### BACKGROUND OF THE INVENTION

There is a current trend for replacing fossil fuel-powered vehicles with electric road vehicles (EVs) to attempt reducing carbon emissions. Thus, the number of EVs has notably grown in the recent years and it is expected to continue increasing even more rapidly.

One of the major problems faced by the adoption of EVs is the charging infrastructure. Currently, high costs are involved in the deployment of charging stations. This is impacting on the number of charging points along areas and driving routes and the availability of a charging point may not be guaranteed. As a result, potential users aware of this situation are becoming reluctant to switch to EVs. There is a need to keep pace with rising demand of more EVs. In particular, cost-effective solutions for deploying charging stations would be an asset.

### DESCRIPTION OF THE INVENTION

In view of the above, it would be desirable a solution that remedies existing drawbacks, that facilitates installation of charging stations in a cost-effective and efficient manner, either in private or public parking lots.

It is an object of the invention a charging point for a charging station according to the independent claim 1, which is conceived in view of the problems identified. It is also an object of the invention a charging station wireless management system including one or more charging points. Several embodiments of the invention are defined in the dependent claims.

According to various embodiments of the present invention, a more economical solution is exposed than other existing ones while the requirements for electrical safety for the EV supply equipment are observed.

In the present invention, the terms are used with their conventional meaning. However, for greater clarity and ease of understanding, the following definitions are provided:
- Electric road vehicles (EV) cover all road vehicles, including plug-in hybrid road vehicles (PHEV), that derive all or part of their energy from on-board rechargeable energy storage systems (RESS).
- Electric vehicle supply equipment (EVSE) is a set of devices aimed to supply electric power from the public grid or an electrical network to an EV with the purpose of charging its RESS.
- Charging point is the stationary part of an EVSE. In this text, the term charging point is used to name an AC charging device, typically including at least a main relay and the electronics for the pilot and proximity functions defined in the IEC 61851-1 standard. Sometimes, a charging point is also called charger.
- Charging station is a set of one or more charging points installed for charging several EVs simultaneously in a certain location.
- Socket outlet, or simply socket, is the port included in a charging point that physically mates with a plug to supply power to charge an EV.
- Vehicle inlet is the port on an EV that receives charging power.
- Cable is an assembly of flexible conductors, a plug and a vehicle connector that connects the socket of a charging point with the EV inlet.
- Plug is the end of the cable that interfaces with the socket on a charging point.
- Connector is the end of the cable that interfaces with the EV inlet.
- A managing system is a back end entity, typically a computer server that communicates with one or several charging stations, handles information and manages the infrastructure. Among its functionalities may be the authentication of the users, the charge authorisation and the billing for the energy transaction.

The charging point according to the invention includes a printed circuit board, PCB, and a cover enclosing the PCB. The PCB includes several female contacts directly soldered thereto and may include on-board electronic components for enabling wireless communication, measuring power delivered, processing information from the EV including battery-charge information and controlling the charging operation accordingly. The cover includes on the front side: a sunken portion and protruding hollow elements extending from the sunken portion, each allocating a female contact inside, so that each protruding hollow element is able to receive, in a fitting position, a male contact of a plug of a charging cable when the sunken portion couples with said plug (e.g. a conventional plug). The cover includes on the rear side: a flat portion in a middle zone and a peripherical edge forming a plane where the PCB is placed and held. A resin layer may enclose the PCB from the opposite side of the cover.

### BRIEF DESCRIPTION OF THE FIGURES

Embodiments of the present invention are described, by way of example only, in the accompanying drawings in which similar elements are numbered the same in the various Figures:
**FIGs. 1A-1C** show several prior art devices part of an EVSE. **FIG. 1A** shows an overview of main devices. **FIGs. 1B-1C** show more detailed several aspects of a "type 2" socket according to standard IEC - 62192-2 (three-phase charging point) from the prior art.
**FIG. 2** is a representation of a printed circuit board for a single-phase charging point according to the present invention.
**FIGs. 3A** is external front_view of a charging point according to the present invention. **FIG. 3B** is external rear view of the cover of a charging point. **FIG. 3C** is an exploded view of the charging point.
**FIG. 4** is a schematic block diagram of a charging point according to the present invention.
**FIG. 5** is a schematic communication diagram of interconnected charging points and a system according to the present invention.
**FIG. 6** is a schematic block diagram of a system according to the present invention.

### Glossary of reference numbers:

10 Socket.
11 PCB.
12 Protruding hollow element.
13 Female contact.
14a Flat portion.
14b Sunken portion.
102 Plug.
104 Charging cable.
106 EV inlet.
108 Vehicle connector.
131 Female contacts, neutral.
132 Female contact, protective earth.
133 Female contact, line L1.
134 Female contact, pilot signal.
135 Female contact, proximity signal.
136 Female contact, line L2.
137 Female contact, line L3.
20 Charging point.
21 Cover.
22 Internal walls.
23 Peripherical edge.
24 EV.
41 Probe.
42 Power supply.
43 Energy meter.
44 Main relay.
45 Pilot and proximity function electronics.
46 Interlock electronics and servomotor.
47 Microcontroller.
47a Status indicator LED.
47b Wireless communication antenna.
50 Wireless mesh network.
51 Ethernet cable.
52 Gateway.
53 Internet communication interface.
54 Managing system
55 Computer server.
61 Electrical grid wires.

### DESCRIPTION OF EMBODIMENTS

With reference to the previous figures, without limitation, various embodiments of the invention are presented for a better understanding.

In an embodiment of the charging point according to the invention, an advantageous electromechanical design is proposed. This design allows obtaining several advantages over known products:
- It is economical because it has fewer components.
- It has lower manufacturing costs because all the electronic components are assembled in a PCB so the assembly process can be automated with a state-of-the-art pick and place machine.
- It is easy to install in public parking lots due to unnecessary communications wires.
- It is versatile and can be installed either in open or underground parking lots.

Preferred embodiments of the charging point comply with the standards used in this field. In particular, the preferred embodiments comply with IEC 61851-1 standard, which is a standard that exhaustively defines the requirements for electric vehicle charging points.

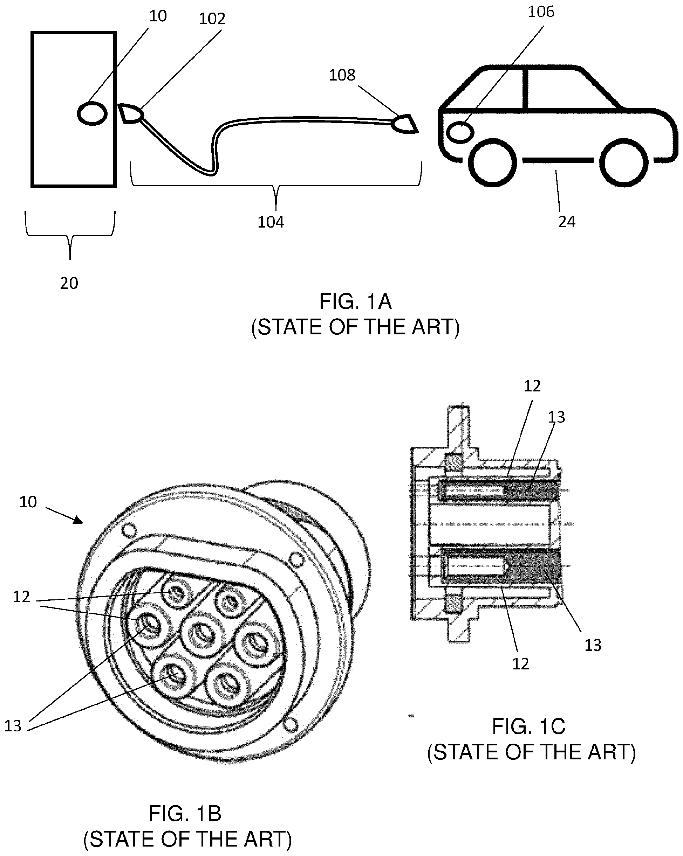

Prior art **FIG. 1A** schematically illustrate a conventional charging station with a single charging point **20** for charging an EV **24** via a charging cable **104.** Conventionally, charging points **20** include a socket **10** on where the plug **102** of a charging cable **104** is connected. Thus, a user may connect the connector **108** of the charging cable **104** to an inlet **106** on the EV **24.** As required by the IEC 61851-1, this socket **10** also complies with the IEC 62196-1 and IEC 62196-2 standards. The latter defines other types of compatible connectors/plugs, which in the terminology used are called accessories. The IEC 62196-2 standard geometrically defines the shape of the socket **10,** to ensure that it fits the plug **102** of the user's charging cable **104** (which is also defined in the standard).

Prior art **FIGs. 1B-1C** illustrate drawings from an annex from the standard document of IEC 62196-2 for a socket **10.** In this annex, the shape of the socket **10** is defined. Particularly, two distinct elements are shown: protruding hollow elements **12** and female contacts **13** externally surrounded by element **12.** The female contact **13** is inserted into the protruding hollow element **12** and is also a hollow cylindrical piece. The protruding hollow element **12** is a non-conducting casing and is commonly made of plastic material. Several female contacts **13** can be seen, each one being inside the hole defined by a corresponding protruding hollow element **13.** In the example there are seven female contacts **13,** which are made of a conductive material and each one is adapted to receive a respective cylindrical male contact present in a compatible plug (as shown in FIG. 1A) designed to be inserted so an electric current during the charging process may flow through each of them.

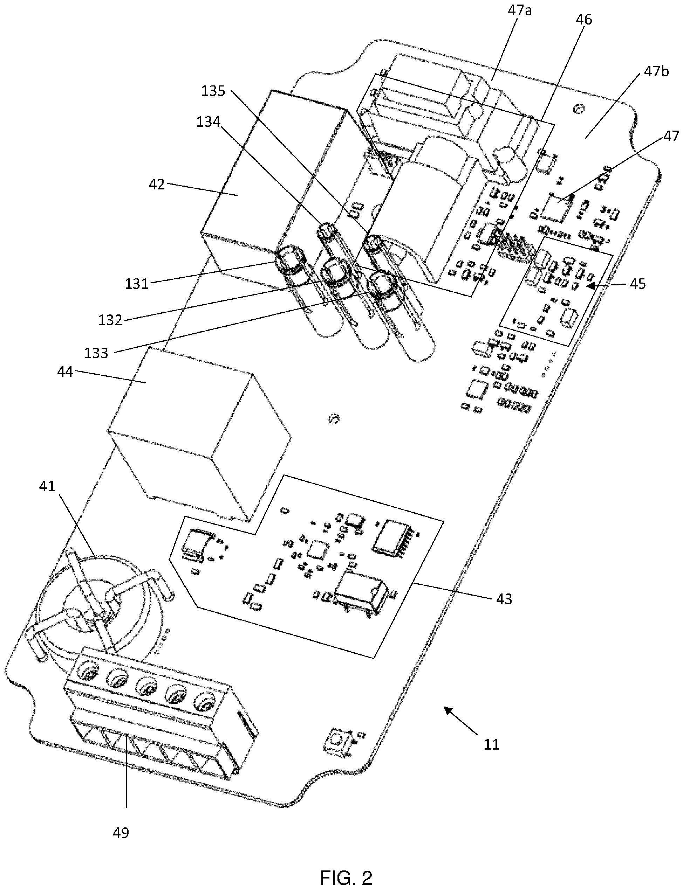

Note the standard defines two sizes of female contacts **13.** Two smaller female contacts on the top and five larger female contacts below. In case of a single-phase socket, instead of five, there are just three (see FIG. 2). The present invention applies to both types.

According to the embodiments of the present invention, it is proposed that a charging point to be suitable for use as socket. The proposed charging point integrates at least some of the functions of a charging point to be installed, for instance, in an open or underground public parking lot.

The common practice which comes from the study of regulations suggests adding to the manufacturing process, installation of cables and using connection terminals. Thus, when designing a charging point the first option is finding a commercial socket already certified according to the IEC 62196-1 and IEC 62196-2 standards and simply install it into a box or enclosure, where the rest of the electrical and electronic elements required for the charging operation are hosted. Since these elements are detached from the socket, both parts require to be electrically connected. This common practice means materials and installation costs. Mainly, due to the fact that more cables and terminals are needed, and a manual installation of terminals is usually required. The latter comes with tightening torque errors that may take place and that may even lead to a premature failure of the charging point.

Several embodiments of the present invention use a different approach aiming to avoid these issues.

**FIG. 2** shows a printed circuit board (PCB) **11** suitable for this purpose. The PCB **11** is intended to be part of a charging point and includes socket contacts. Polygons enclose several components with an associated function. The PCB **11** integrates electronic and electric components to comply with the regulations of a charging point, particularly with IEC 61851-1.

Conventionally, the electronic components are included inside the charging point enclosure detached from its corresponding socket. The integration of electrical and electronic components in a unit PCB **11** and protected by a cover facilitates the deployment of charging points as they can be installed as units.

Advantageously, the PCB **11** includes a set of five internal female contacts **131-135** directly soldered to the board for a single-phase facility (seven in case of a PCB for a three-phase charging point). In the central part, the female contacts **131-135** are each arranged in a position to correspond to each of the top five protruding hollow elements **12** to comply with the standards, in a similar fashion as shown in the socket of FIGs. 1A-1B. Female contact **131,** corresponds to neutral line (N); female contact **132** corresponds to protective earth (PE) line; female contact **133** corresponds to phase line (L1). Female contact **134** corresponds to pilot signal. Female contact **135** corresponds to proximity signal.

The PCB **11** also includes specific circuits for implementing functions to manage the charging infrastructure, including its economical exploitation. Namely, a main relay **44,** electronics for IEC 61851-1 pilot/proximity functions **45,** a microcontroller **47,** a power supply for the control subsystem **42,** an RDC-DD residual current probe **41** that complies with IEC 62955 standard, an energy meter **43,** an interlock device **46,** a status indicator LED **47a** and an antenna for wireless communications **47b.** Several terminals **49** are also included at the bottom of the PCB **11** to allow connection to the power grid. The terminals **49** are internally connected, by tracks on the PCB **11** to the corresponding female contacts **131-133** through intermediate elements, such as the RDC-DD residual current probe **41,** the energy meter **43** and the main relay **44.** The terminals **49** are to be externally connected to the PE, L1 and N wires during its installation.

The explanations offered for the embodiment shown in FIG. 2 are valid in case of a three-phase device for a charging point (like the one depicted in FIG. 1). A three-phase charging point would contain two additional larger female contacts corresponding to the other two phase lines (L2, L3). A PCB **11** for this kind of charging point would also contain all the other elements required in a charging station, such as the relay, the differential probe, the energy meter, the pilot function control electronics, the connector lock, the status indicator LED, etc.

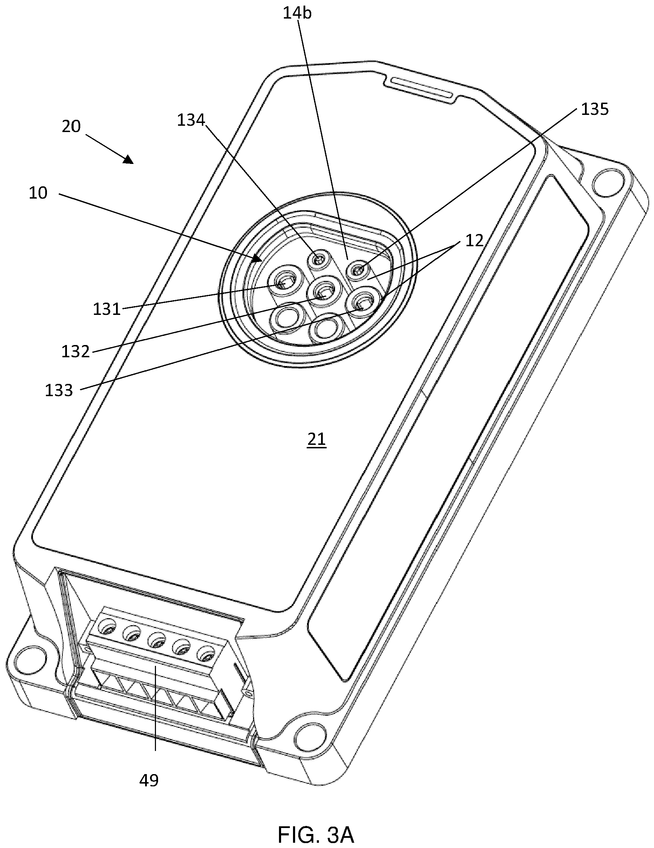

**FIG. 3A** shows an external view of a single-phase charging point **20** for a charging station in a similar view angle as in the PCB of FIG. 2. In this case a protective housing cover **21** has been included. It can be seen that once the front of the cover **21** is coupled to the PCB, the female contacts **131-135** are provided inside the protruding hollow elements **12** and a charging point integrating its own socket is obtained. Geometrically, the design of the charging point complies with the IEC-62196-2 standard.

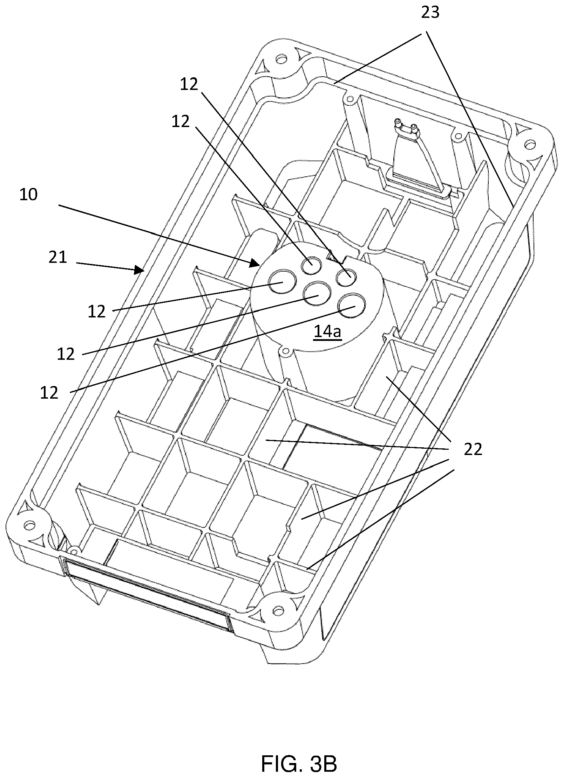

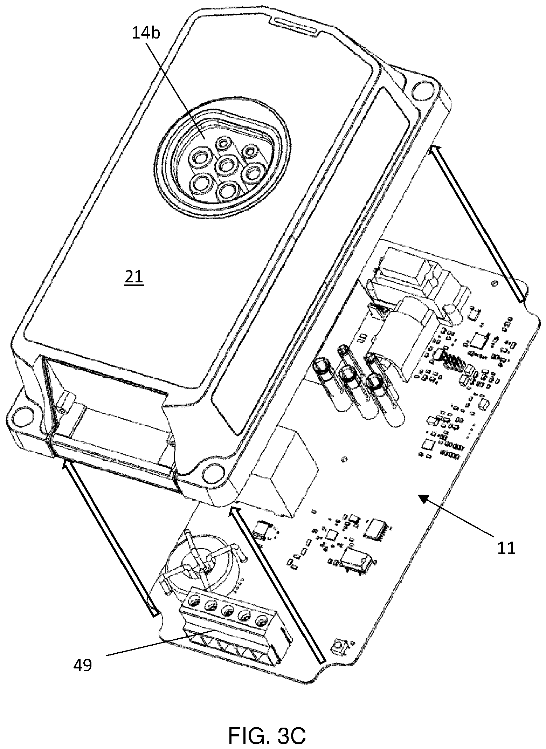

**FIG. 3B** shows an internal view of the cover **21** of FIG. 3A. As can be seen, the cover **21** includes internal walls **22** and provide a reinforced structure since internal walls **22** join opposite sides from top to bottom and right to left. From the inside, the front-cover **21** also includes a peripherical edge **23** along with a flat portion **14a** so they define a plane that serves as a support for placing and holding a PCB in a fixed position. Note the inner flat portion **14a** corresponds with the external sunken portion **14b** (see FIGs. 3A, 3C) where a plug is to be connected. Once a PCB is mounted inside the cover, mechanical stress is mostly absorbed by the cover. This mechanical stress is mainly produced when connecting the plug of the charging cable to the charging point (or when disconnecting it therefrom).

**FIG. 3C** shows an exploded view of the front side of the cover **21** and the PCB **11.** The two parts fit each other so each female contact welded on the PCB **11** is received by a corresponding protruding hollow element of the front-cover part **21.** A plug of a charging cable fits into place with the sunken portion **14b**. A layer of sealing resin (e.g. a thermal resin) is preferably added to the rear side of the cover **21** to improve robustness and safety and make the charging point sufficiently resistant to the ingress of dust or water. Additionally, some resin may have thermal properties to allow a more efficient heat dissipation. Note the terminals **49** are easily accessible from the exterior. The charging point **20** is intended to be installed by an operator as a single piece unit (the cover **21** enclosing the PCB **11** on one side and the sealing resin on the other).

Externally, the charging point **20** has appearance of a socket having a size bigger than commercial ones (as it requires some extra space to include the already described PCB). The charging point **20** works as a "smart socket" with some of the functions of a charging point. The charging point **20** is suitable for public or private parking lots and its installation is quick and less prone to errors.

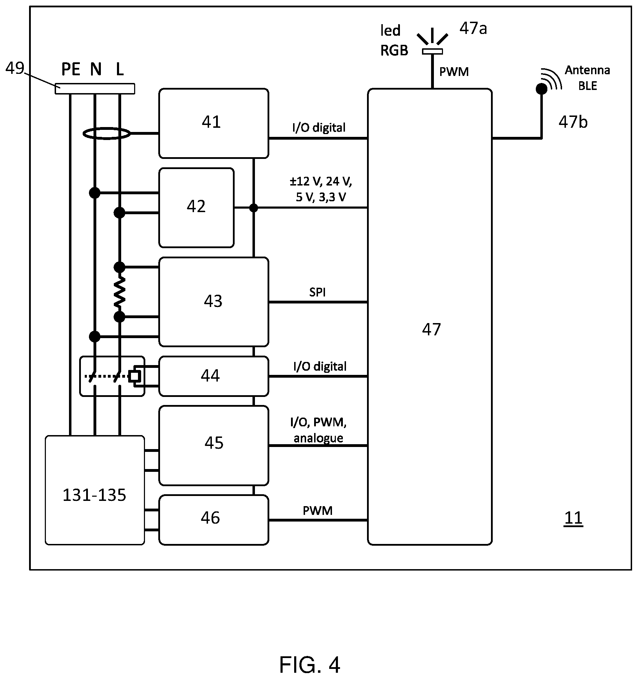

**FIG. 4** illustrates an example of functional block diagram of a charging point, with some specific components or subcircuits and with a supply connection comprising a phase line wire, a neutral wire and protective earth wire. Among the specific components, there are:
A set of female contacts **131-135** for inserting the corresponding set of male contacts of the plug of a charging cable.

A microcontroller **47** (e.g., circuit CC2652R1) for controlling charging operations. It includes wireless communication capacity (e.g., Bluetooth radio) and control capacity of several peripherals.

An RDC-DD differential probe **41** (according to IEC 62955), for detecting DC leakage currents greater than a threshold. This allows installing a type "A" residual circuit breaker (instead of type B). Type A residual circuit breakers are used for the detection AC and pulsed DC residual currents. Type B residual circuit breakers can detect all the type A components as well as very low and flat DC residual currents. A type B residual circuit breaker is much more sensitive and precise and therefore much more expensive than a type A circuit breaker. Using a type A represents a cost saving. This differential probe **41** has a digital output for indicating an occurrence of DC leakage current greater than a threshold, typically 6 mA.

A power supply **42** for which powering components, for instance capable of providing voltages of ± 12 V, 5V and 3.3 V.

An energy meter **43** in communication with the microcontroller **47** via an SPI communication bus.

A relay switch **44** for turning on and/or off the mains supply to the EV. This relay switch **44** is normally triggered by a voltage of 24 V to close the contacts but, once closed, it is fed with a much lower maintenance voltage, so that consumption during charging process is reduced.

The relay switch **44** may be provided with mirror contacts, which make it possible to detect if contacts have been welded due to overheating and issue the corresponding alarm signals to the installation owner and/or user.

Terminals **49** at the bottom of the PCB **11** allow an easy connection to the power grid.

The PCB integrates all the necessary functions and elements, including the contacts that form a commercial socket, without the need to make any wire connection. Conventionally, these functions are fulfilled by components or devices inside the charging point enclosure.

The pilot and proximity functions are defined in the IEC 61851 -1 standard. For the pilot function, a pilot electronic circuit **45** is included that issues a PWM electrical signal with variable duty cycle to communicate. The PWM signal serves to inform the EV of a maximum current available for charging. This PWM signal is also used by the EV to inform its status or need to the charging point (if there is an EV and, if so, whether or not it requests a recharge). The proximity function circuit **45** integrates a resistor inside the plug of the charging cable. The resistance is measured from the charging point and deduct the nominal current of the cable depending on the measured values defined in the standard. This allows the microcontroller **47** to infer what type of cable the user has connected. It also allows the microcontroller **47** to limit the maximum current that the EV consumes based on its nominal current.

The charging point **20** has a locking function with auxiliary driver electronics **46.** It comprises a bolt that prevents the involuntary or negligent disconnection from the plug of a charging cable during charging. For instance, the charging point **20** includes a servomotor that acts on the bolt to lock or release the plug controlled with a PWM signal.

For user interaction an RGB led **47a** is included.

The charging point **20** can be enhanced with other functionalities such as interface screens, RFID scanners, etc...

Once the charging point has been described in detail, the EV charging infrastructure is to be discussed. Public charging points are usually communicated to a remote managing system. The managing system is part of the EV charging infrastructure and allows to identify the user of a charging point, authorise a use of the charging point and manage a payment and an invoicing of the energy transaction involved in the charging process. The managing system is usually a computer server programmed and controlled by the organization in charge of the exploitation of charging points.

The most widely adopted protocol for communications between the charging points and the back end is OCPP. This protocol uses the TCP/IP protocol and web sockets to send the data involved in the operations in JSON format (i.e. structured text format). The interaction with users is normally made directly through communications between the back end and an app running in a user's smart phone.

When it comes to the hardware involved in the integration of the charging stations to the back end, the common practice is to use an internet access based on an ethernet physical layer on each charging point. This requires the installation of an ethernet cable. All charging points should be connected to a switch and a router to provide them with internet access. For a massive deployment of charging points in public parking lots with hundreds of places, the installation of all the communications wires becomes more expensive and unpractical.

Other solutions use intermediate wired buses as Modbus RTU for communicating with a gateway that is implementing the OCPP profile of all the charging points. This simplifies the installation but still leads to unaffordable costs for a massive deployment.

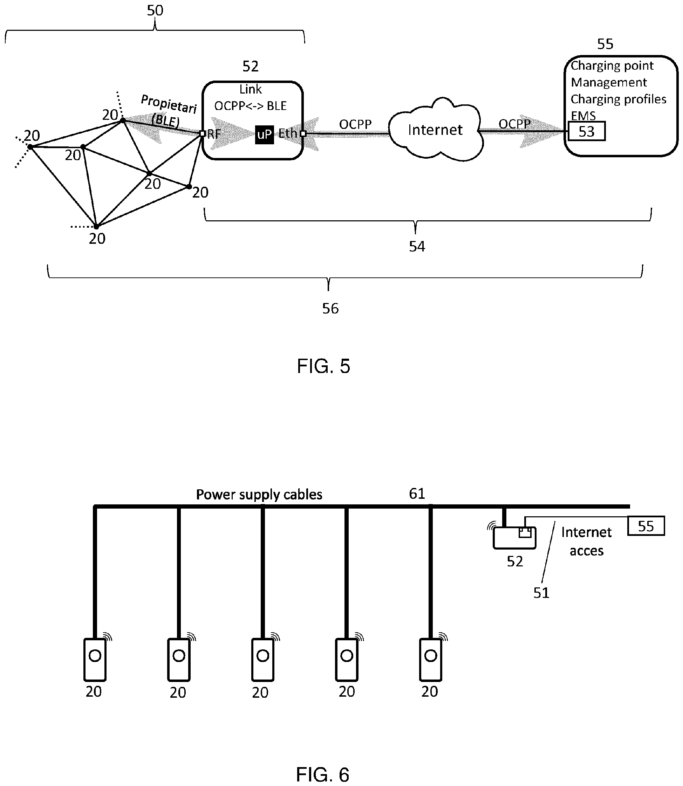

**FIG. 5** depicts a proposed communication architecture of the charging infrastructure **56** that addresses the above issues. It is partially based on a wireless mesh network **50** including several charging points **20** and a single gateway **52.** A second or third gateways can be added to the wireless mesh network **50** for redundancy and robustness purposes. In the wireless mesh network **50,** the following operations can be implemented: when a node, either charging point **20** or gateway **52,** receives a message containing a destination address of another node, it automatically resends the message to a nearby node to let the information jump from one node to another to finally reach the destination node. In the communications field this role is known as relay, router, repeater, among other terms. The gateway **52** can send or receive information to or from an internet communication interface **53** of a computer server **55** to build a managing system **54.** As a result, information reaches destination nodes placed farther than the range of the wireless signal of a source node and a remote supervision and control of the charging points **20** can be performed on the computer server **55.** This architecture fits a typical layout of a parking lot, where neighbouring charging points **20** may be separated around 3 meters.

Examples of protocols suitable for use are Bluetooth Mesh, Wifi Mesh or Zigbee among others. They are economical despite only have a few meters of signal range. Particularly, Bluetooth Mesh is preferrable. It suffices a gateway as the only ethernet wired device running the OCPP protocol and implementing the OCPP profile of all the charging points **20** on the wireless mesh network **50.**

A managing system **54** handles the individual operations of each of the charging points **20** via the gateway **52** that acts as bridge.

**FIG. 6** shows a schematic example of an electrical network including five charging points **20** with wireless communication capability and a gateway **52** with wireless and wired (e.g., via ethernet cable **51**) communication capability to communicate with charging points **20** and with a computer server **55,** respectively. The system also includes an electrical cable **61** for connecting the charging points **20** to the grid. The deployment of a charging station with one or more charging points **20** is much more economical and the electrical installation less complex.

The scope of the appended claims is not to be construed as being limited to the particular embodiments described herein.

## Claims

1. Charging point (20) for an electrical vehicle (24), EV, comprising:
- a printed circuit board (11) comprising:
a first group comprising female contacts (131-133) corresponding to neutral, protective earth and line, and a second group comprising female contacts (134-135) corresponding to pilot function and proximity function, wherein each female contact (131-135) is directly soldered to the printed circuit board (11);
- a cover (21) for hosting the printed circuit board (11), the cover (21) comprising on the rear side:
a peripherical edge (23) and a flat portion (14a) forming a plane for placing and holding the printed circuit board (11); and
the cover (21) comprising on the front side:
a sunken portion (14b) and a plurality of protruding hollow elements (12) extending from the sunken portion (14b), each protruding hollow element (12) configured to allocate a female contact (131-135) inside, wherein each protruding hollow element (12) is configured to receive a male contact of a plug (102) of a charging cable (104) when the sunken portion (14b) receives said plug (102), before charging operation.

2. The charging point (20) according to claim 1, wherein the printed circuit board (11) further comprises:
a microcontroller (47) and on-board electronics components (41-45) for enabling wireless communication, measuring power delivered to the EV (24), processing battery-charge information received from the EV (24) and controlling current to be delivered to the EV (24);
at least three terminals (49) electrically communicated with the first group of female contacts (131-133).

3. The charging point (20) according to claim 2, wherein the on-board electronics components (41-45) comprise at least one of the following: a probe (41), a power supply (42), an energy meter (43),a main relay (44) and pilot and proximity function electronics (45) or a combination thereof.

4. The charging point (20) according to claims 2 or 3, wherein the printed circuit board (11) comprises a wireless communication unit configured to communicate using a wireless mesh network to communicate with a different charging point (20) or with a gateway (52).

5. The charging point (20) according to claim 4, wherein the mesh network follows at least a Bluetooth Mesh, Wifi Mesh, Zigbee, Thread, Farlab or WiBACK protocol.

6. The charging point (20) according to any of claims 1 to 5, further comprising a sealing resin layer for enclosing the printed circuit board (11) in combination with the cover (21) and forming a one-piece unit.

7. A managing system (54) for charging electrical vehicles (24) comprising:
- electrical grid cables (61);
- a computer server (55) for processing messages of charging points (20);
- a gateway (52) configured to communicate a message either from, or to, one or more charging points (20) through a wireless mesh network and to externally communicate said message to, or from, the internet to the computer server (55) via an internet communication interface (53) comprised in the computer server (55).

8. The system (54) according to claim 7, wherein mesh network follows at least a Bluetooth Mesh, Wifi Mesh, Zigbee, Thread, Farlab or WiBACK protocol.

9. Infrastructure (56) comprising a managing system (54) according claims 7 or 8 and a plurality of charging points (20) according to any of claims 2 to 6.
